# EUROPEAN PATENT SPECIFICATION

(11) **EP 0 410 345 B1**
(45) Date of publication and mention of the grant of the patent: **05.10.1994**
(21) Application number: 90114073.1
(22) Date of filing: 23.07.1990
(51) Int. Cl.: F16H 61/02

(54) **Automatic transmission**
Automatisches Getriebe
Transmission automatique

(30) Priority: 24.07.1989 JP 190878/89
(43) Date of publication of application: 30.01.1991
(73) Proprietor: KABUSHIKI KAISHA ZEXEL, Shibuya-ku, Tokyo (JP)
(72) Inventor: Otsuka, Masuhiro, c/o Kabushiki Kaisha ZEXEL, Higashimatsuyama-shi, Saitama-ken (JP); Kono, Hiromi, c/o Kabushiki Kaisha ZEXEL, Higashimatsuyama-shi, Saitama-ken (JP); Satoh, Yuji, c/o Kabushiki Kaisha ZEXEL, Higashimatsuyama-shi, Saitama-ken (JP)
(74) Representative: Goddar, Heinz J., Dr.

(56) References cited:
- US-A- 3 961 546
- US-A- 4 361 060
- PATENT ABSTRACTS OF JAPAN vol. 8, no. 83 (M-290)(1520) 17 April 1984,& JP-A-59 1855 (TOYO KOGYO K.K.) 7 January 1984
- PATENT ABSTRACTS OF JAPAN vol. 13, no. 455 (M-879)(3803) 13 October 1989, & JP-A-1 176842 (MAZDA MOTOR CORP.) 13 July 1989
- PATENT ABSTRACTS OF JAPAN vol. 12, no. 262 (M-721)(3109) 22 July 1988,& JP-A-63 43836 (TOYOTA MOTOR CORP) 24 February 1988

## Description

### Background of the Invention

### Field of the Invention

The present invention relates to automatic transmissions which are controlled based on the vehicle speed and the throttle opening.

### Description of the Prior Art

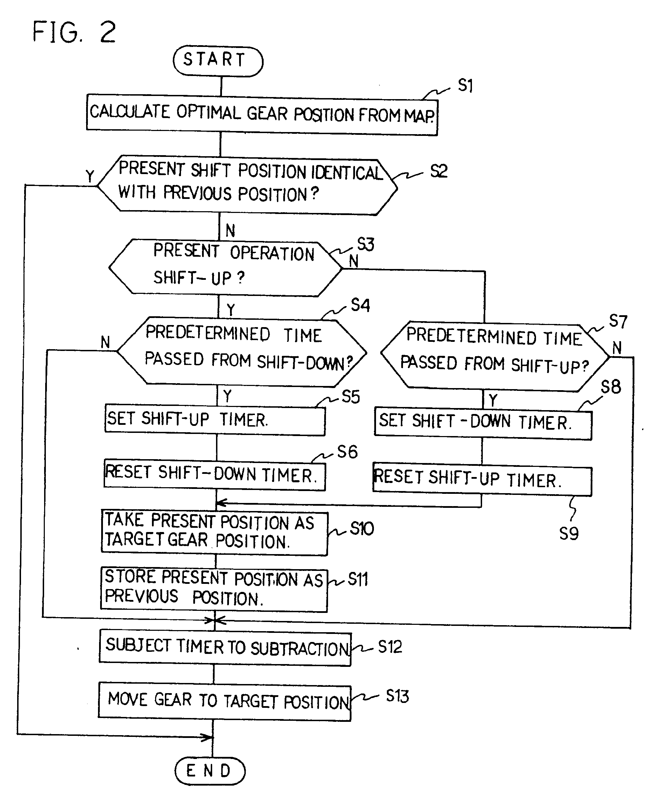

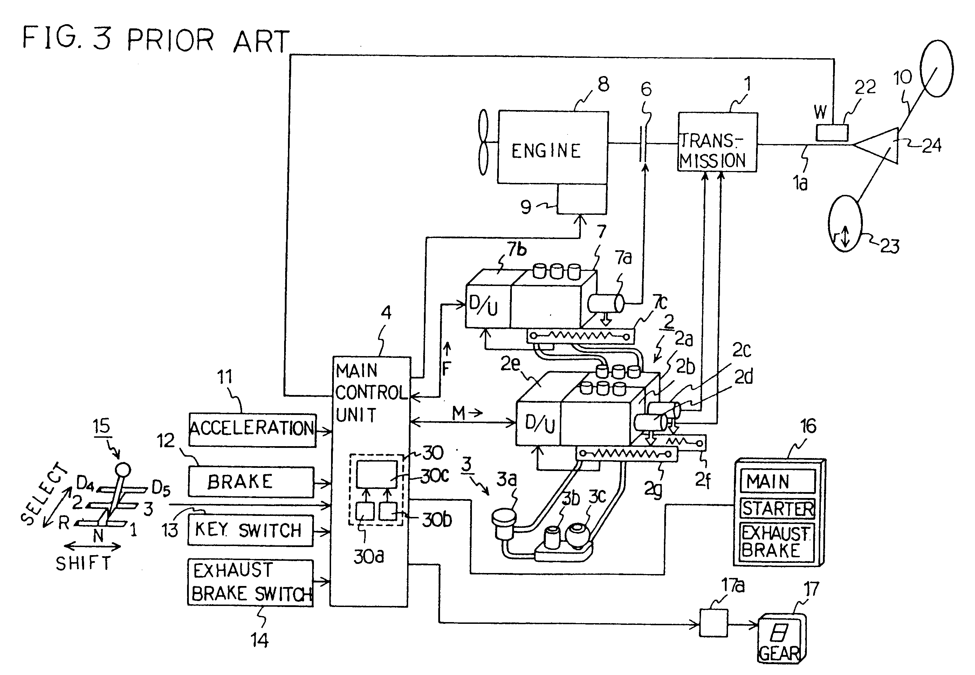

Fig. 3 shows a conventional automatic transmission which includes a well-known parallel axis gear transmission 1 and an actuator 2 which consists of a select actuator 2a and a shift actuator 2b for controlling the transmission 1. The respective actuators 2a and 2b are driven by a hydraulic drive system 3 which consists of a tank 3a, a pump 3b, an accumulator 3c, and a hydraulic pressure switching electromagnetic valve (not shown) so that the piston rods 2c and 2d control the drive gear of the transmission 1. The actuator 2 is controlled by a drive unit (D/U) 2e, which in turn is controlled by a main control unit 4. Potentiometers 2f and 2g are provided to detect the positions of the piston rods 2c and 2d, respectively, to perform a feedback control so that the actual position signals from the potentiometers 2f and 2g agree with the target position signal M from the main control unit 4. Thus, the gear is shifted from the neutral position "N" 5g to one of the following positions: the first gear position "1" 5a, the second gear position "2" 5b, the third gear position 5c, the automatic drive positions "D₄" 5d and "D₅" 5e, and the reverse position "R" 5f as shown in Fig. 2. The automatic drive positions 5d and 5e provide automatic gear shift in the range between the first and fourth gears and between the second and fifth gears, respectively.

A clutch 6 is interlocked with the piston rod 7a of an actuator 7 for connection and disconnection. A hydraulic pressure is supplied to the clutch actuator 7 from the hydraulic drive system 3 to make a control by a drive unit 7b so that the position of a piston rod 7a detected by the a potentiometer 7c agrees with the target position signal F from the main control unit 4. The drive unit 7b is controlled by the main control unit 4. An engine 8 is provided with a control unit 9 which is controlled by the main control unit 4. The rotation of the engine 8 is transmitted to the axle 10 via the clutch 6 and the transmission 1.

The main control unit 4 receives respective signals from an accelerator opening detector 11, a brake pedal detector 12, a key switch 13, an exhaust brake switch 14, and a selector 15 and a rpm output signal W from a vehicle speed detector 22 which mounted on an output shaft 1a to control the drive units 2e and 7b, the control unit 9, a display panel 16, and a control unit 17a for a gear position display panel 17.

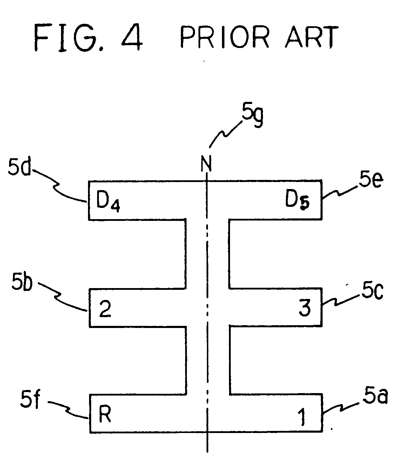

The main control unit 4 multiplies the rpm output signal W from the vehicle speed detector 22 by a constant α which consists of the radius r of wheels 23 and the gear ratio of a differential gear 24 to provide a vehicle speed V on an instrument panel (not shown) along with the engine rpm and the fuel volume. Consequently, the main control unit 4 controls the clutch 6 and the transmission 1 according to the throttle opening S linked to the accelerator pedal, the vehicle speed V, and the shift position of a selector 15. The gear position is shifted to one of the shift positions 5a-5f from the neutral position 5g as shown in Fig. 4.

The main control unit 4 has an automatic shift unit 30 for performing an automatic shift operation based on the vehicle speed and the engine load as described in Japanese Patent Application Kokai No. 59-1855. The automatic shift control 30 includes first and second gearshift maps 30a and 30b having gearshift characteristics N which have been preset based on the relationship between the vehicle speed V (= the rpm W·X the constant α) and the throttle opening S (linked to the accelerator pedal), and a gear position selector 30c for selecting a gear position of the transmission 1 based on the gear shift characteristics N of the first and second gear shift maps 30a and 30b to control the actuator 2 for providing an automatic shift up or down.

When the selector 15 is set in the automatic drive position "D₄" 5d or "D₅" 5e, the gear position selector 30c controls the transmission 1 for automatic gear shift based on the first or the second gear shift map 30a or 30b. That is, automatic gearshift is made in the range between the first and fourth gears at the automatic drive position 5d and between the second and fifth gears at the automatic drive position 5e. The automatic shift unit 30 inhibits another gear shift for a predetermined period of time after the gear shift to prevent uncomfortable successive gear shifts.

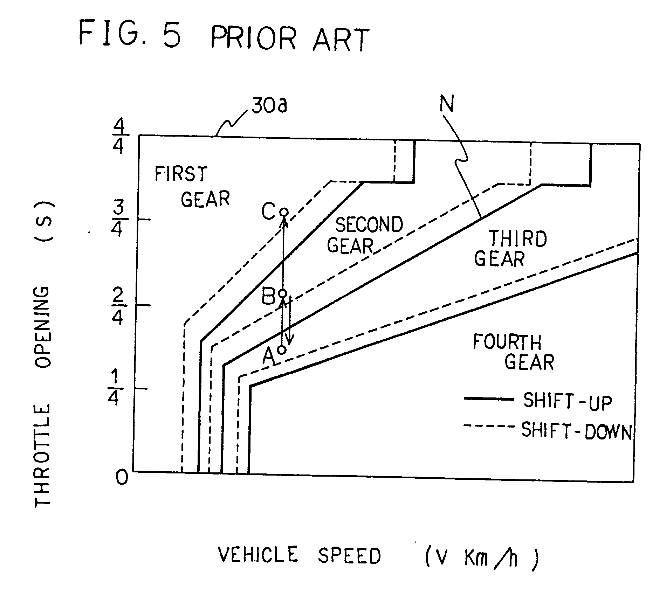

However, when the accelerator is stepped on all the way for high acceleration, with the transmission 1 at the third gear position (at a point A in the gearshift map 30a of Fig. 5), the automatic shift unit 30 moves to a point B but cannot go to a point C (from the second gear to the first gear) for the predetermined period of time, thus failing to provide satisfactory acceleration.

Japanese Patent Application Kokoku No. 62-12050 discloses an automatic transmission which includes a sensor for detecting the rate of changes in stepping on the accelerator so that no gear shift is made when the rate of changes is greater than a predetermined level. With this automatic transmission, when the rate of changes becomes lower than the predetermined level, gear-shift is made from the point A to the point C; that is, from the third gear to the first gear to not only provide satisfactory acceleration but also prevent uncomfortable successive gear shifts.

However, individual drivers have different senses of feedback from the accelerator pedal upon acceleration or deceleration so that it is difficult to match the drivers' sense of feedback with the rate of changes in stepping on the accelerator. In addition, when the rate of changes is large, no gear shift is made so that there is a delay in acceleration. When the accelerator is subjected to frequent press and release cycles on a steep mountain road, for example, uncomfortable successive gear shifts take place.

### Summary of the Invention

Accordingly, it is an object of the invention to provide an automatic transmission which is able to provide satisfactory acceleration and deceleration without uncomfortable successive gear shifts.

According to the invention there is provided an automatic transmission which includes a transmission; a drive unit for engaging a selected gear of said transmission the transmission; a gearshift map having a gearshift characteristic preset according to a relationship between a vehicle speed and a throttle opening; a gear position selector for selecting a gear position of the transmission according to the gearshift characteristic and controlling the driving means to perform a shift-up or shift-down operation; a shift period detector for finding whether a present shift operation according to the gearshift map is not in the same direction as a previous shift operation but within a predetermined period of time; a shift inhibiter responsive to an output of the shift period detector to control the gear position selector for inhibiting a shift operation according to the gearshift map if the shift operation is not in the same direction as the previous shift operation within the predetermined period of time.

The automatic transmission according to the invention includes a shift period detector for finding whether a shift operation is not in the same direction as the previous one but within a predetermined period of time and a shift inhibiter responsive to an output of the shift period detector to control the gear position selector for inhibiting the shift operation according to the gearshift map if the shift operation is not in the same direction as the previous one, such as from shift-up to shift-down or from shift-down to shift-up, but within the predetermined period of time while permitting the shift operation according to the gearshift map if it is a shift operation in the same direction, such as from shift-up to shift-up or from shift-down to shift-down.

The above and other objects, features, and advantages of the invention will become more apparent from the following description when taken in conjunction with the accompanying drawings.

### Brief Description of the Drawings

Fig. 1 is a schematic diagram of an automatic transmission according to an embodiment of the invention;
Fig. 2 is a flow chart useful for explaining how the automatic transmission of Fig. 1 works;
Fig. 3 is a schematic diagram of a conventional automatic transmission;
Fig. 4 is a plan view showing the gear positions of the conventional automatic transmission; and
Fig. 5 is a graph showing a gearshift map.

### Description of the Preferred Embodiment

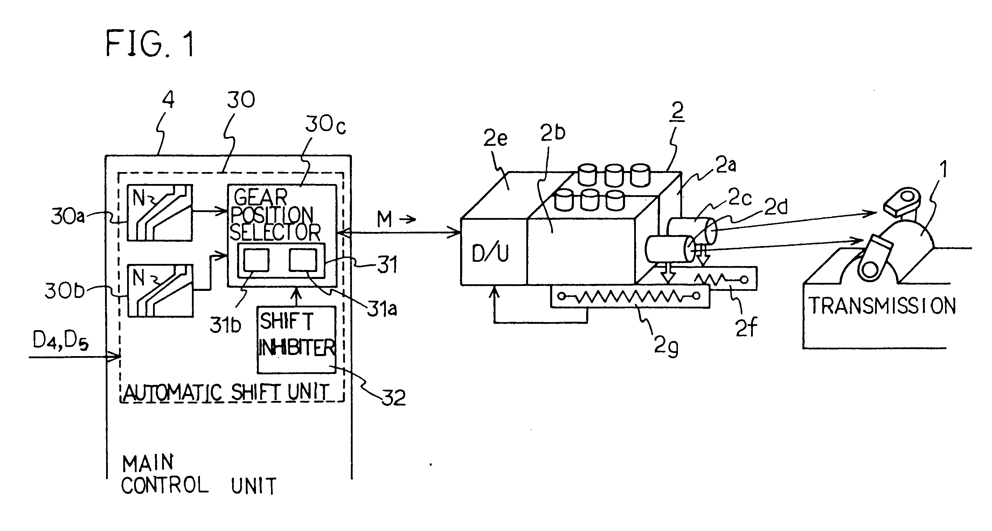

In Figs. 1 and 2, like reference numerals denote like or corresponding parts or components of Figs. 3 and 5 and, therefore, their description will be omitted. An automatic gearshift unit 30 includes a first gearshift map 30a; a second gearshift map 30b; a gear position selector 30c; a shift period detector 31 for finding whether a shift operation according to the first gearshift map 30a or second gearshift map 30b is made in the same direction as the previous one, such as from shift-up to shift-up or from shift-down to shift-down, in a predetermined period of time; and a shift inhibiter 32 responsive to an output of the shift period detector 31 to control the gear position selector 30c for inhibiting a shift operation according to the gearshift map 30a or 30b in the direction opposite to the previous shift, such as from shift-up to shift-down or from shift-down to shift-up, in a predetermined period of time. The shift period detector 31 includes a shift-up timer 31a operative at the time of a shift-up operation and a shift-down timer 31b operative at the time of a shift-down operation.

The operation of the automatic gearshift unit 30 will be described with reference to Fig. 2. When the selector 15 is at the automatic drive position 5d, the optimal gear position is calculated from the vehicle speed V and the throttle opening S according to the gearshift map 30a (Step S1). The calculated optimal gear position (present shift) is compared with the previous gear position (Step S2). If they are identical, no gearshift is made.

If they are different, on the other hand, the present shift is checked to determine whether it is shift-up or shift-down (Step S3). If it is shift-up, whether the previous shift operation is shift-up or, if it is shift-down, the shift-down timer 31b is checked (Step S4). If the shift-down timer 31b reads zero; i.e., a predetermined time has passed from the previous shift-down operation, the shift-up timer 31a is set (Step S5) and the shift-down timer 31b is reset (Step S6).

If the present shift operation is found to be shift-down at Step 3, whether the previous shift operation is shift-down, or whether the shift-up timer 31a reads zero; i.e., a predetermined time has passed from the previous shift-up operation, is checked (Step S7). If the predetermined time has passed, the shift-down timer 31b is set (Step 8) and the shift-up timer 31a is reset (Step S9). When both of the timers 31a and 31b are set, the present gear position is taken as a target gear position (Step 10) and stored as a previous position (Step 11).

If the present shift operation is different from the previous one, such as from shift-up to shift-down or from shift-down to shift-up, and neither the timer 31a nor 31b has passed the predetermined time, the shift inhibiter 32 inhibits the shift operation. Consequently, neither the target gear position nor the previous gear position is changed.

Then, the timers 31a and 31b are subjected to subtraction (Step S12) and control the actuator 2 to move the gear to the target gear position if the target gear position is different from the previous one (Step S13).

When a shift-down follows another shift-down operation; e.g., the target gear position is shifted from the point A to the point B and then from the point B to the point C as shown in the gearshift map 30a of Fig. 5, a shift from the point B to the point C is inputted to the gear position selector 30c before a shift from the point A to the point B is made (the third gear to the second gear) because of the same shift operation. However, the shift inhibiter 32 inhibits a shift to the second gear so that a shift from the third gear to the first gear is made to not only provide a satisfactory acceleration but also prevent uncomfortable successive shift operations.

When a shift is made from shift-down to shift-up such as from the point A to the point B and then to the point A again, no shift from the point B to the point A (shift-up) is made if the shift is within a predetermined period of time because of different shift operations. That is, only a shift-down is made so that no successive shifts are made on a mountain road where the acceleration pedal is stepped on or off frequently, thereby preventing uncomfortable driving conditions. In addition, the above operation is decided based on the gearshift independent of the acceleration so that there is little or no delay in the shift operation, thereby providing an optimal driving control.

As has been described above, the automatic transmission according to the invention includes the shift period detector for finding whether the present shift operation according to the gearshift map is not in the same direction as the previous shift operation but within a predetermined period of time and the shift inhibiter responsive to an output of the shift period detector to control the gear position selector for inhibiting the shift operation according to the gearshift map if the shift operation is found to be not in the same direction within the predetermined period of time so that not only satisfactory acceleration or deceleration is obtained but also uncomfortable successive gearshifts are prevented, thus making the automatic transmission more adaptable to various driving conditions.

The features disclosed in the foregoing description in the claims and/or in the accompanying drawings may, both separately and in any combination thereof, be material for realising the invention in diverse forms thereof.

## Claims

1. An automatic transmission for a vehicle comprising:
- a transmission (1) with a plurality of gears,
- a driving unit (2) for engaging a selected gear of said transmission;
- a gearshift map (30a, 30b) having a gearshift characteristic preset according to a relationship between a vehicle speed and a throttle opening of the engine of the vehicle which depends on the rate of changes in stepping on the accelerator;
- a gear position selector (30c) for selecting a gear position of said transmission (1) according to said gearshift characteristic and controlling said driving unit (2) to perform a shift-up or shift-down operation;
- a shift period detector (31) for calculating a present gear position according to said gearshift map (30a, 30b), comparing the present gear position with the previous gear position, and finding whether a present shift operation is not in the same direction as a previous shift operation but within a predetermined period of time; and
- a shift inhibitor (32) responsive to an output of said shift period detector (31) to control said gear position selector (30c) for inhibiting a shift operation according to said gearshift map (30a, 30b) if said shift operation is not in the same direction as said previous shift operation, but within said predetermined period of time.

## Patentansprüche

1. Ein automatisches Getriebe für ein Fahrzeug mit:
- einem Getriebe (1) mit einer Mehrzahl von Gängen,
- einer Antriebseinheit (2) zum Einlegen eines ausgewählten Gangs des Getriebes;
- einem Schaltungsplan (30a, 30b) mit einer Schaltcharakteristik, die entsprechend einer Beziehung zwischen der Fahrzeuggeschwindigkeit und der Drosselöffnung der Maschine des Fahrzeugs, die von der Rate der Änderungen der Betätigung des Gaspedals abhängig ist;
- einem Gangpositionsselektor (30c) zum Auswählen einer Gangposition des Getriebes (1) entsprechend der Schaltungscharakteristik und zum Steuern der Antriebseinheit (2) zum Ausführen eines Heraufschaltens oder eines Herunterschaltens;
- einem Schaltperiodendetektor (31) zum Berechnen einer gegebenen Schaltposition entsprechend dem Schaltplan (30a, 30b), Vergleichen der gegebenen Schaltposition mit der vorangehenden Schaltposition und Ermitteln, ob ein vorliegender Schaltvorgang nicht in derselben Richtung wie der vorangehende Schaltvorgang, jedoch innerhalb eines vorgegebenen Zeitraums ist, und
- einem Schaltverhinderer (32), der den Schaltpositionsselektor (30c) auf ein Ausgangssignal des Schaltperiodendetektors (31) ansprechend steuert zum Verhindern eines Schaltvorgangs entsprechend dem Schaltplan (30a, 30b), wenn der Schaltvorgang nicht in derselben Richtung wie der vorangehende Schaltvorgang, jedoch innerhalb des vorgegebenen Zeitraums ist.

## Revendications

1. Transmission automatique pour véhicule comprenant :
- une transmission (1) à plusieurs vitesses;
- une unité de commande (2) pour engager une vitesse selectionnée de ladite transmission;
- une carte de changement de vitesse (30a, 30b) ayant une courbe caractéristique de changement de vitesse préétablie en fonction de la relation entre la vitesse du véhicule et l'ouverture des gaz du moteur du véhicule qui dépend de la vitesse de changement d'appui sur l'accélérateur,
- un sélecteur de position de vitesse (30c) pour sélectionner une position de vitesse de ladite transmission (1) conformément à la courbe caractéristique de changement de vitesse et pour commander à ladite unité de commande (2) de réaliser une opération de passage d'une vitesse supérieure ou d'une vitesse inférieure
- un détecteur de délai de changement (31) pour calculer une position de vitesse actuelle en fonction de ladite carte de changement de vitesse (30a, 30b), comparer la position de vitesse actuelle avec la position de vitesse précédente, et détecter si le changement actuel n'est pas dans le même sens que le changement précédent mais dans un délai déterminé; et
- un inhibiteur de changement (32) commandé par une sortie dudit détecteur de délai de changement (31) pour commander audit sélecteur de changement de vitesse (30c) d'inhiber un changement en fonction de ladite carte de changement de vitesse (30a, 30b) si ledit changement n'est pas dans le même sens que le changement précédent, mais dans un délai déterminé.
